Europäisches Patentamt

European Patent Office

Office européen des brevets

(19)

(11) Publication number: **0 106 966**
**B1**

## (12) EUROPEAN PATENT SPECIFICATION

(45) Date of publication of patent specification: **08.04.87**

(21) Application number: **83108204.5**

(22) Date of filing: **19.08.83**

(51) Int. Cl.⁴: **F 16 K 15/20,** B 60 C 29/00

(54) A valve for mounting on the rim of wheels provided with tubeless tyres.

(30) Priority: **21.10.82 IT 2385882**

(43) Date of publication of application:
**02.05.84 Bulletin 84/18**

(45) Publication of the grant of the patent:
**08.04.87 Bulletin 87/15**

(84) Designated Contracting States:
**AT BE DE FR GB**

(56) References cited:
**DE-A-2 639 571**
**DE-B-2 303 646**
**DE-C-1 020 885**
**DE-U-1 871 095**
**FR-A-1 576 079**
**US-A-3 489 166**
**US-A-3 967 639**

(73) Proprietor: **BRIDGEPORT BRASS S.p.A.**
**via L. da Vinci, 30**
**I-24036 Ponte s. Pietro (BG) (IT)**

(72) Inventor: **Pagani, Ezio**
**Via degli Albani, 17**
**I-24100 Bergamo (IT)**

(74) Representative: **Dr. Ing. A. Racheli & C.**
**Viale San Michele del Carso, 4**
**I-20144 Milano (IT)**

EP 0 106 966 B1

# Description

This invention relates to a valve provided with an external annular gasket which is employed as a sealing member between the rim and valve body in wheels using tyres without any tube, normally referred to as "tubeless".

DE—A—2 639 571 and corresponding US—4 046 163 disclose a valve for mounting on the rim of wheels provided with tubeless tyres, comprising a valve body, a mechanism for opening and closing the valve and an external annular gasket; said gasket externally has at one end an extended lip directed towards the rim, then an intermediate zone having a larger diameter than that of the hole in the rim and close to this intermediate zone an annular groove of reduced diameter, it being provided that the height of said intermediate zone is substantially equal to the rim thickness, while a groove-like impression is provided on the valve body at the zone where the rim will be positioned. Said external annular gasket is bonded or adhered to the valve body. This involves the use of relatively costly materials and/or processes.

It is the object of the present invention to provide a valve with its seals, which is highly reliable, very economical and capable of simultaneously allowing a perfect or tight sealing between the rim and valve at any pressure that a tyre may have for road transports.

The above mentioned object has been achieved by providing a valve as specified in claim 1.

This valve will be used together with a mechanism of a conventional type for valve opening and closing, or together with further simplified mechanisms.

An embodiment provides a mechanism comprising a pin, a spring and an internal gasket, said pin being provided at one end thereof with a support for the spring and at the other end with a cavity for accommodating said internal sealing gasket of the valve, and in the hole of the valve body a narrowing being provided, so that it can perform the function of both a second support for the spring and a closure seat for the valve cooperating with the internal sealing gasket mounted on said pin.

A further improvement provides that said pin has an enlarged zone with a larger diameter than the narrowing diameter, so that when inserted in the valve body said pin cannot exit therefrom.

Another embodiment provides a valve mechanism comprising three elements: an externally threaded small tube and a pin, both of which are made of plastic material, and a gasket mounted on said pin and disposed to provide the sealing between the pin and a small tube, said small tube being provided at one end thereof with a first tapered portion having such a tapering as to accommodate the tapering of the valve body in which it is to be inserted, and a second tapered portion, furthermost than the former, which has a different tapering than the first tapered portion, such as to interfere with the tapered portion of the valve body, whereby this second tapered portion will, by deforming during screwing down, adhere to the tapered portion of the valve body and seal therewith.

Preferably, this embodiment provides that said end of the small tube carrying on its external surface the above described dual tapering is fitted on its internal portion with a further tapered portion which is used as a seat for the gasket carried by the pin.

Preferably, the pin has a "Y" shape in cross-section.

The plastic for providing both said small tube and pin above described is preferably selected of the type having self-lubricating features.

Finally, the valve may or may not comprise a return spring which prevents ambient air from entering the tube when vacuum has been provided in the latter for control and/or packaging reasons.

The new valve carries out a good sealing between external gasket and valve body even without bonding or adhesion between them; this allows for the valve to be carried out with materials and processes less expensive, while still obtaining excellent sealing and reliability.

This invention will now be further described with reference to some exemplary embodiments as shown in the accompanying drawings, in which:

Fig. 1 is an exploded view of a first embodiment;

Fig. 2 is a view showing the valve of Fig. 1 as partially mounted;

Fig. 2a is a view showing the enlarged detail A of Fig. 2;

Fig. 3 is a view of the valve of Fig. 1 when completely mounted and at closed position;

Fig. 4 is an exploded view showing another embodiment of the valve mechanism;

Fig. 5 is a view of the completely mounted embodiment of Fig. 4;

Fig. 5a is a view showing the enlarged detail B of Fig. 5;

Fig. 6 is an exploded view of a further embodiment;

Fig. 7 is a view of the valve of Fig. 6 as mounted; and

Fig. 7a is an enlarged view of the detail D of Fig. 7.

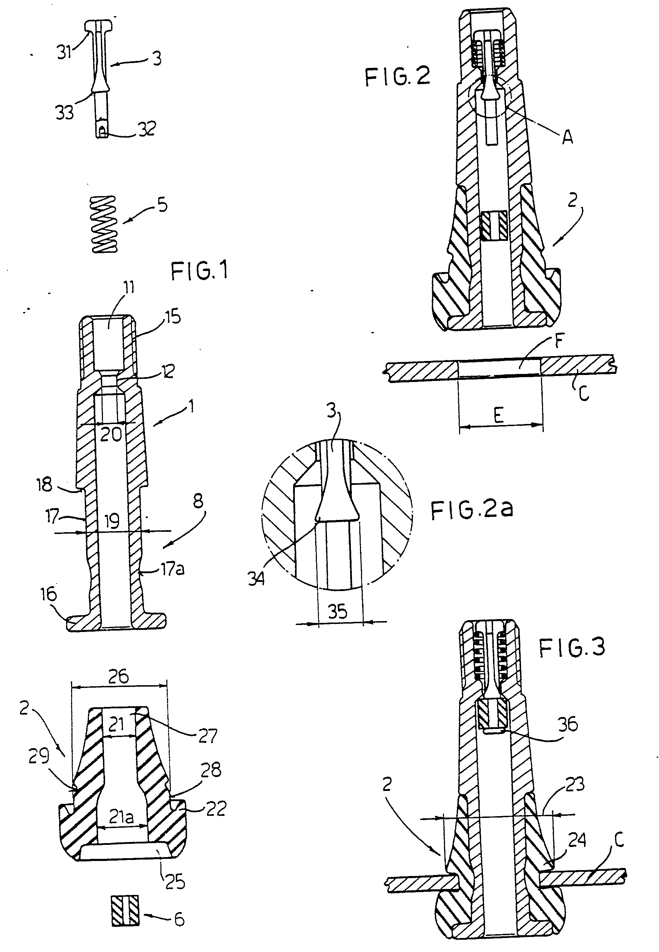

Referring first to Figs. 1 to 3, it will be seen that reference numeral 2 generally denotes an external gasket with a hole 27 having partly a smaller diameter 21 than the diameter 19 of the cylindrical portion 17, of valve body 1 on which said gasket 2 will be inserted. Another portion of said hole 27 has a larger diameter 21a than the diameter 19 of the portion 17 of the valve body 1.

Preferably, said gasket 2 has, at the end which will be inside of the tyre, a cavity 25 into which the head 16 of the valve body 1 will penetrate.

Externally, said gasket has at an intermediate zone thereof an external cylindrical portion 28 having a height nearly corresponding to the thickness of the rim C. The diameter 26 of this cylindrical portion 28 is larger than the diameter E of the hole F in said rim C.

Adjacent to the cylindrical portion 28 and at that side which will be positioned within the tyre, a lip 22 is provided directed towards said rim C, so as to create a better adherence therewith.

Close to its external limit, said intermediate zone 28 is provided with a groove 29. When the gasket is mounted within the hole F of said rim C, the latter by narrowing the cylindrical portion 28 causes a bulging which provides a second lip 24 having such a diameter as to retain said gasket 2 in position when inserted in the rim.

The valve body 1 has an interior comprising a through hole 11, at an intermediate location of which a narrowing 12 is provided. The outside part of said body, nose or outer side, is conventional, that is it has a threading 15 for receiving a normal cap. The valve head 16, which is provided at the other end of said body 1, will be placed inside of the rim C and will be of a larger size than said hole F. Together with an abutment 18 provided on the external surface of said body 1 and cylindrical portion 17 therebetween, said head 16 provides a housing 8, in which said external gasket 2 is firmly anchored, preventing the tyre pressure from ejecting said valve from the hole F of said rim C. Within its cylindrical portion 17, said housing 8 has a circumferential impression 17a arranged at the position to be taken by the rim C.

The valve opening and closing mechanism has been simplified to maximum extent, and consists of only three components, that is the pin 3, the spring 5 and the internal annular gasket 6.

Said pin 3 is so shaped as to have at one end thereof a bearing 31 to act as a seat for said spring 5. At another end thereof, it is provided with an abutment 33 forming together with a hole creating a rivet 36 as a seat for receiving and retaining the internal gasket 6. Said pin 3 (Fig. 2a) has also an enlargement 34, which is such as to have a maximum diameter 35 which is larger than the diameter 20 of the narrowing 12 provided in said valve body 1.

This valve can be assembled as follows:

(1) The external gasket 2 is placed in the housing 8 of the valve body by a nose facilitating the gasket sliding into the threaded area 15 of the valve.

(2) The spring 5 is inserted in the hole 11 of the threaded end 15 (nose zone), whereupon said pin 3 is inserted in the spring 5 exerting a slight pressure, which is required in order to overcome the resistance due to the interference existing between the minimum diameter 20 of the narrowing 12 and the diameter 35 of the enlargement forming the collar of said abutment 33.

(3) At the other end of the valve body (head side), the internal gasket 6, which will be secured by the rivet 36, is inserted on said pin 3.

(4) Now the valve can be subjected to sealing test, etc. and to (optional) assembling of the cap which, in addition to ensuring an additional air sealing, has a protective function against weather agent, dust, etc.

The valve is readily and easily mounted in the rim by the usual methods used for "snap-in" type of valves, since it lacks threaded ring nut (conversely to the "clamp-in" valves). It is not rigidly blocked on the rim, but by bending has the capability of absorbing impacts without being damaged.

Preferably, said body 1 is made of resin, but it may also be made of brass or aluminum.

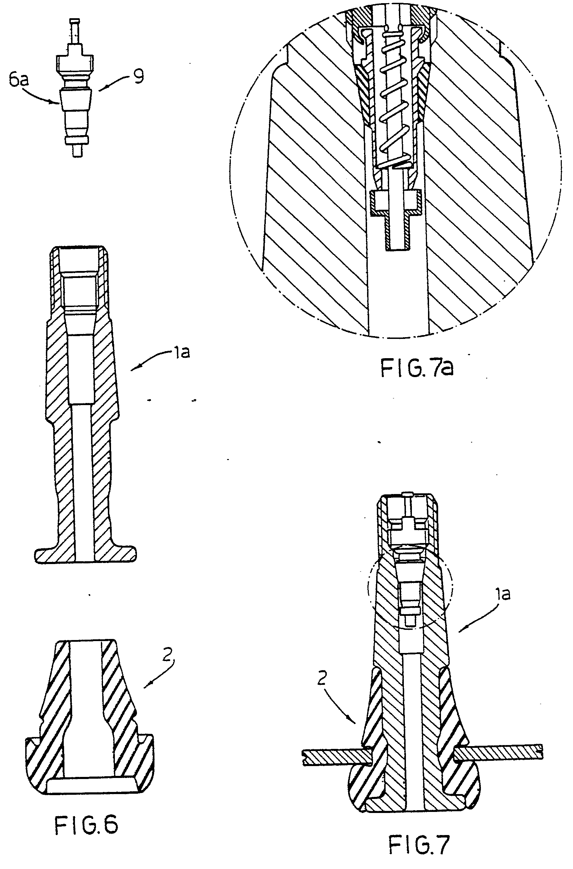

However, the interior of valve 1a could be also machined so as to accommodate a conventional mechanism 9 (Figs. 6, 7 and 7a). In this case, the valve body 1a internally has a conical portion which is such as to receive the also conical internal gasket 6a.

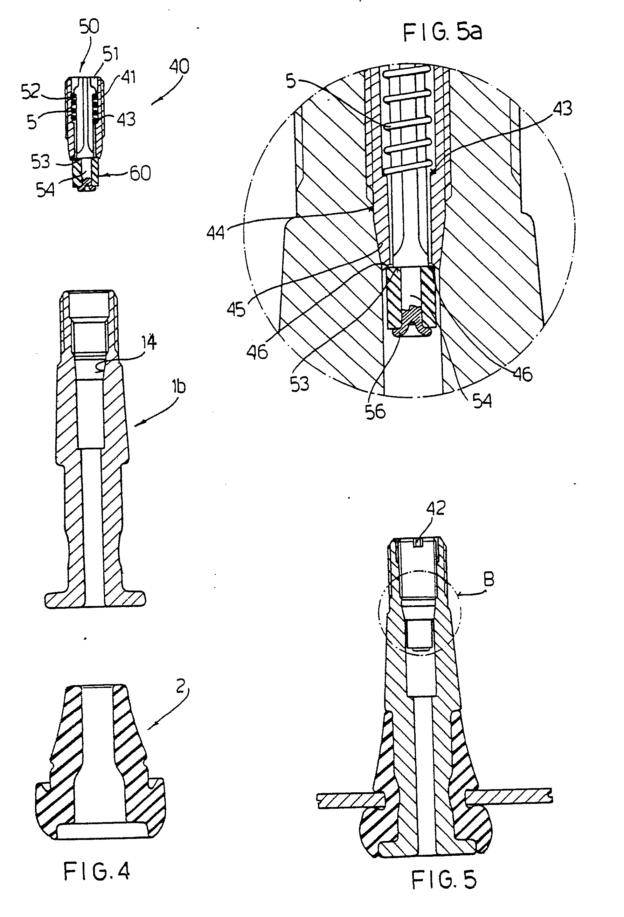

Another embodiment has been shown in Figs. 4, 5 and 5a. In this case, the proposed mechanism comprises a small tube 40, a pin 50 and a gasket 60. The small tube 40 is provided with an external thread 41 extending from one end to a major portion of the whole external surface thereof. This end also has a milling 42 which serves for introducing said small tube into the valve body 1b. Said small tube 40 also has an internal abutment 43 acting as a seat for the head 51 of said pin 50 or spring 5. Adjacent to the end opposite to that carrying said milling 42, the small tube 40 has a first external tapered portion 44 having such a tapering as to accommodate the tapering provided inside of the valve body 1b, as discussed in the following. Adjacent and furthermost with respect to the first tapered portion 44 a second tapered portion 45 is provided, which is of a different tapering to the former and such as to interfere with the tapering 14 of the valve body when said small tube is screwed down within the valve body 1b. The end of the small tube externally carrying the two tapered portions 44 and 45 is internally provided with a further tapered portion 46, serving as a seat for the gasket 60.

The pin 50 is provided with a head 51 forming an abutment 52, which will serve as a seat for the spring 5. Said pin has an elongate body which is of "Y" shape in cross-section. This shape is such as to cause said pin to perfectly uniformly and smoothly slide within the small tube. At the opposite end to that carrying the head 51, said pin 50 is provided with a seat for the gasket 60, comprising an abutment 53 and a projection 54 terminating with a hole enabling said gasket to be secured by riveting, obtained by locally deforming said projection 54 to provide the rivet 56.

**Claims**

1. A valve for mounting on a hole in the rim (C) of wheels provided with tubeless tyres, said valve comprising a valve body (1), having a longitudinal through hole (11) and an outer surface provided with a circumferential seat (17), a mechanism (3, 5, 6) for opening and closing the valve, an external gasket (2) fitted on the valve body, said external gasket having an extended lip (22) directed towards the rim, an intermediate zone (28) having an external diameter which is larger than that of the hole (F) in the rim and a height not less than the rim thickness, said external gasket having a through hole (27) for receiving said valve body, said through hole of the external gasket comprising a first portion and a second portion, the said first portion having an internal diameter (21) which is smaller than the internal diameter (21a) of the second portion, the valve body seat (17) having a circumferential impression (17a) at a position axially corresponding to the position of the rim with respect to the valve, characterrized in that:

the said internal diameter (21) of said first portion of the through hole (27), when the gasket (2) is in a disassembled condition with respect to the valve body, is smaller than the external diameter (19) of the valve body portion (17) whereon it will be fitted, so to obtain a tight fit between the body and the gasket without the latter being bonded to the body, while the said internal diameter (21a) of said second portion of the through hole (27) is larger than the external diameter (19) of the valve body portion (17); further characterized in that said valve body (1) has an enlarged head (16) at an end thereof, head which has an external diameter larger than the diameter of the hole in the rim, said head defining the seat (17) for the external gasket.

2. A valve as claimed in Claim 1, said mechanism comprising a pin (3), a spring (5) and an internal gasket (6), said pin being provided at one end thereof with a support for said spring, and at the other end with a cavity for accommodating said internal sealing gasket of the valve, characterized in that a narrowing (12) is provided in the hole (11) of the valve body to serve both as a second support for the spring and as a seat for valve closing, cooperating with the internal sealing gasket mounted on said pin.

3. A valve as claimed in Claim 1, said mechanism comprising three elements: an externally threaded small tube (40) and a pin (50), and a gasket (60) mounted on said pin and so arranged as to provide the sealing between the pin and the small tube, characterized in that said small tube being provided at one end thereof with a first tapered portion (44) having such a tapering as to accommodate the tapering of the valve body in which it is to be inserted, and a second tapered portion (45) furthermost than the former, which is of a different tapering than the first tapered portion, that is such as to interfere with the tapered portion (14) of the valve body, so that by deforming during screwing down operation, said second tapered portion adheres to the tapered portion of the valve body and seals therewith.

4. A valve as claimed in Claims 2 or 3, characterized in that said pin has a "Y" shape in crosssection.

**Patentansprüche**

1. Ventil zur Montage auf eine Reifenfelge (C) für Räder mit schlauchlosen Reifen mit einem Ventilkörper (1), der ein Durchgangsloch (11) und eine äußere mit einem Umfangssitz (17) versehene Oberfläche aufweist, mit einem Mechanismus (3, 5, 6) zum Öffnen und Schließen des Ventils und einer äußeren auf dem Ventilkörper angebrachten Ringdichtung (2), die eine in Richtung der Felge sich erstreckende Lippe (22), einen Zwischenbereich (28) mit größerem Außendurchmesser als den des Loches (F) in der Felge und eine nicht geringere Dicke als die Dicke der Felge hat, wobei die Außendichtung ein Durchgangsloch (27) zur Aufnahme des Ventilkörpers aufweist und einen ersten und zweiten Teil umfaßt, wobei der erste Teil einen Innendurchmesser (21) hat, der geringer als der Innendurchmesser (21a) des zweiten Teils ist, und der Sitz (17) des Ventilkörpers einen peripherischen Eindruck (17a) hat, der in Axialstellung mit der Stellung der Felge gegenüber dem Ventil übereinstimmt, dadurch gekennzeichnet, daß der Innendurchmesser (21) des Teils des Durchgangsloches (27) im abmontierten Zustand gegenüber dem Ventilkörper geringer als der Außendurchmesser (19) des Teils (17) des Ventilkörpers, in den er befestigt wird, ist, um eine wirksame Abdichtung zwischen dem Ventilkörper und der Dichtung zu erhalten, ohne daß letztere an ersterem befestigt wird, wobei der Innendurchmesser (21a) des zweiten Teils des Durchgangsloches (27) größer als der Außendurchmesser (19) des Teils (17) des Ventilkörpers ist; der Ventilkörper hat an einem Ende einen verbreiterten Kopf (16) mit einem größeren Außendurchmesser als dem Durchmesser des Felgenloches, wobei der Kopf den Sitz (17) für die Außendichtung bestimmt.

2. Ventil nach Anspruch 1, dadurch gekennzeichnet, daß der Mechanismus aus einer Nadel (3), einer Feder (5) und einer Innendichtung (6) besteht, wobei die Nadel an einem Ende mit einer Abstützung für die Feder und am anderen Ende mit einem Hohlraum zur Aufnahme der Innendichtung für das Ventil versehen ist und außerdem eine Verengung (12) im Loch (11) des Ventilkörpers vorgesehen ist, die sowohl als zweite Abstützung für die Feder als auch als Sitz für das geschlossene Ventil dient und mit einer auf der Nadel montierten Innendichtung zusammenarbeitet.

3. Ventil nach Anspruch 1, dadurch gekennzeichnet, daß sie einen aus drei Elementen bestehenden Mechanismus vorsieht: ein Rohr mit Außengewinde (40), eine Nadel (50) und eine auf der Nadel montierte und so angeordnete Dichtung (60), daß die Abdichtung zwischen Nadel und Rohr verwirklicht wird, wobei das Rohr an einem seiner Enden einen ersten konischen Teil (44), dessen Konizität sich der Konizität des Ventilkörpers in dem er eingeführt ist, anpaßt und eine zweite von der ersten entferntere Konizität (45) aufweist, die von der Konizität des ersten Teils verschieden ist, um mit dem ersten konischen Teil (14) des Ventilkörpers zu interferieren, sodaß der zweite konische Teil sich während des Einschraubens verformt und an dem konischen Teil des Ventilkörpers anliegt und ihn abdichtet.

4. Ventil nach Ansprüche 2 oder 3, dadurch gekennzeichnet, daß die Nadel im Querdurchschnitt gesehen Y-förmig ist.

**Revendications**

1. Soupape pour le montage sur la jante (C) de roues munies de pneus tubeless comprenant un corps soupape (1) ayant un trou passant longitudinal (11) et une surface extérieure munie d'un siège périphérique (17), un mécanisme (3, 5, 6) pour l'ouverture et la fermeture de la soupape, et un joint annulaire extérieur (2) monté sur le corps soupape, ce joint extérieur ayant une lèvre étendue (22) en direction de la jante, une zone intermédiaire (28) ayant un diamètre extérieur plus grand que celui du trou (F) dans la jante et une hauteur non inférieure à l'épaisseur de la jante, ledit joint extérieur ayant un trou passant (27) en mesure de recevoir ledit corps soupape, ledit trou passant du joint extérieur comprenant une première et une seconde portion: ladite première portion ayant un diamètre intérieur (21) qui est plus pétit que le diamètre intérieur (21a) de la seconde portion, le siège (17) du corps soupape ayant une empreinte périphérique (17a) en position axialement correspondante à la position de la jante par rapport à la soupape, caractérisé par le fait que:

quand le joint (2) est démonté par rapport au corps de la soupape, ledit diamètre intérieur (21) de ladite première portion du trou passant (27) est plus petit que le diamètre extérieur (19) de la portion (17) du corps soupape sur lequel il sera monté, de façon à obtenir un adjustage étanche entre le corps et le joint sans que le second soit uni au corps, tandis que ledit diamètre intérieur (21a) de ladite seconde portion du trou passant (27) est plus grand que le diamètre extérieur (19) de la portion (17) du corps soupape; il est aussi caractérisé en ce que ledit corps soupape (1) a, à une extrémité, une tête élargie (16), ladite tête a un diamètre extérieur plus grand que le diamètre du trou dans le siège (17) pour le joint extérieur.

2. Soupape selon la revendication 1, ce mécanisme comprenant un pointeau (3), un ressort (5) et un joint intérieur (6), ledit pointeau étant muni à une de ses extrémités d'un appui pour le ressort et à l'autre extrémité d'une cavité capable de recevoir ledit joint intérieur de tenue de la soupape, caractérisée en ce qu'un rétrécissement (12) est prévu dans le trou (11) du corps soupape de sorte qu'il serve aussi bien en tant que second appui pour le ressort que de siège pour fermer la soupape en collaborant avec un joint intérieur de tenue monté sur ledit pointeau.

3. Soupape selon la revendication 1, ce mécanisme comprenant trois éléments: un petit tube fileté (40) extérieurement, un pointeau (50) et un joint (60) monté sur le pointeau lui-même et disposé de façon à réaliser la tenue entre le pointeau et le petit tube, caractérisé en ce que le petit tube étant muni à une de ses extrémités d'une première portion conique (44) ayant une conicité telle qu'elle s'adapte à la conicité du corps soupape où il doit être introduit et une seconde portion conique (45) plus extrême que la précédente, qui a une conicité différente par rapport à la première portion conique, c'est-à-dire telle qu'elle interfère avec la portion conique (14) du corps soupape, si bien que cette seconde portion conique qui se déforme durant le vissage, adhère à la portion conique du corps soupape et assure ainsi la tenue avec ce dernier.

4. Soupape selon les revendications 1 ou 3, caractérisée par le fait que ledit pointeau a la forme d'un "Y" s'il est vu en section.

FIG.1

FIG.2

FIG.2a

FIG.3

FIG. 5a

FIG. 4

FIG. 5

FIG. 7a

FIG. 6

FIG. 7